(19)

Europäisches Patentamt
European Patent Office
Office européen des brevets

(11) **EP 4 729 475 A1**

(12) **EUROPEAN PATENT APPLICATION**
published in accordance with Art. 153(4) EPC

(43) Date of publication:
**22.04.2026 Bulletin 2026/17**

(21) Application number: **24946573.3**

(22) Date of filing: **16.10.2024**

(51) International Patent Classification (IPC):
**C01B 25/37** [(2006.01)]       **H01M 4/58** [(2010.01)]
**H01M 10/0525** [(2010.01)]

(52) Cooperative Patent Classification (CPC):
Y02E 60/10

(86) International application number:
**PCT/CN2024/125343**

(87) International publication number:
**WO 2026/020602 (29.01.2026 Gazette 2026/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2024   CN 202410994099**

(71) Applicant: **Guangdong Brunp Recycling
Technology Co., Ltd.
Foshan, Guangdong 528137 (CN)**

(72) Inventors:
• YU, Haijun
  **Foshan, Guangdong 528137 (CN)**
• LI, Changdong
  **Foshan, Guangdong 528137 (CN)**
• WANG, Tao
  **Foshan, Guangdong 528137 (CN)**
• HUANG, Weiyan
  **Foshan, Guangdong 528137 (CN)**

(74) Representative: **Westphal, Mussgnug  & Partner,
Patentanwälte mbB
Werinherstraße 79
81541 München (DE)**

(54) **IRON PHOSPHATE MATERIAL, PREPARATION METHOD THEREFOR, AND USE THEREOF**

(57)    An iron phosphate material, a preparation method therefor and use thereof. The iron phosphate material is composed of secondary particles formed by agglomeration of primary particles, an equivalent particle size of the primary particles is 20 nm-600 nm, and a $D_{50}$ of the secondary particles is 5 $\mu$m-20 $\mu$m. A hardness index of the iron phosphate material is $\leq$ 5; the hardness

$$\text{index} = \frac{\bar{L}}{V_p}$$

, wherein $\bar{L}$ is an average aspect ratio of the primary particles, which refers to a ratio of an average length of the longest axis to an average length of the shortest axis of the primary particles; and $V_p$ is a specific pore volume of the iron phosphate material expressed in cm³/g. The iron phosphate material meeting the above features has a loose structure and lower overall hardness. When it is used for preparing cathode materials, it can improve the efficiency of grinding with the lithium source, and the wear on the equipment is reduced. The prepared cathode material has excellent electrochemical performance.

FIG. 1

**Description**

**CROSS-REFERENCE TO RELATED APPLICATIONS**

The present disclosure claims priority to Chinese Patent Application No. 202410994099.5 filed with the China National Intellectual Property Administration on July 24, 2024 and entitled "IRON PHOSPHATE MATERIAL, PREPARATION METHOD THEREFOR AND USE THEREOF", the entire contents of which are incorporated herein by reference.

**TECHNICAL FIELD**

The present disclosure relates to the technical field of battery materials, and in particular to an iron phosphate material, a preparation method therefor and use thereof.

**BACKGROUND**

Lithium iron phosphate is one of the most competitive cathode active materials for lithium-ion batteries in the market. Compared with lithium cobalt oxide and ternary cathode materials, the lithium iron phosphate has the advantages of a long service life and excellent safety performance. Moreover, the lithium iron phosphate further has considerable energy density.

Currently, the lithium iron phosphate is mostly prepared by a solid phase method, specifically by sintering anhydrous iron phosphate and a lithium salt. The anhydrous iron phosphate needs to be ground before sintering. However, since the anhydrous iron phosphate is in a crystalline state and has a high lattice strength, material exhibits high macroscopic hardness. This not only causes significant wear on the equipment by the anhydrous iron phosphate during the grinding process but also leads to low grinding efficiency.

In view of the above, the present disclosure is proposed.

**SUMMARY**

An objective of the present disclosure includes providing an iron phosphate material, a preparation method therefor and use thereof, to solve or alleviate the above technical problems.

The present disclosure can be implemented as follows.

In a first aspect, the present disclosure provides an iron phosphate material, which is composed of secondary particles formed by agglomeration of primary particles, wherein the primary particles have an equivalent particle size of 20 nm-600 nm, the equivalent particle size is a diameter of a standard sphere having the same volume as the primary particles; and the secondary particles have a $D_{50}$ of 5 $\mu$m-20 $\mu$m; and

a hardness index of the iron phosphate material is $\leq 5$; the hardness $\text{index} = \dfrac{\bar{L}}{V_p}$, wherein $\bar{L}$ is an average aspect ratio of the primary particles, which refers to a ratio of an average length of the longest axis to an average length of the shortest axis of the primary particles; and $Vp$ is a specific pore volume of the iron phosphate material expressed in cm$^3$/g.

In an alternative embodiment, $\bar{L}$ is measured and calculated by scanning electron microscopy (SEM).

In an alternative embodiment, $V_p$ is calculated from a nitrogen adsorption-desorption isotherm curve.

In an alternative embodiment, the iron phosphate material is an anhydrous iron phosphate material.

In an alternative embodiment, the $V_p$ of the iron phosphate material is 0.3 cm$^3$/g-1.3 cm$^3$/g.

In some alternative embodiments, the $V_p$ of the iron phosphate material is 0.72 cm$^3$/g-1.28 cm$^3$/g.

In an alternative embodiment, the average aspect ratio of the primary particles does not exceed 3.5.

In some alternative embodiments, the average aspect ratio of the primary particles is 1.11-3.14.

In an alternative embodiment, the hardness index of the iron phosphate material has a value of 0.98-3.57.

In an alternative embodiment, the equivalent particle size of the primary particles is 254 nm-411 nm.

In an alternative embodiment, the $D_{50}$ of the secondary particles is 8.74 $\mu$m-10.28 $\mu$m.

In a second aspect, the present disclosure provides a method for preparing the iron phosphate material according to the above embodiments, comprising the following steps: contacting a mixed solution of an iron source solution and a phosphorus source solution with air via a microbubble generator, then mixing a resulting mixture with an oxidant and a pH regulator for a synthesis reaction, and collecting an amorphous iron phosphate precipitate obtained from the reaction; aging the amorphous iron phosphate precipitate to induce crystallization so as to obtain an iron phosphate dihydrate crystal; and calcining the iron phosphate dihydrate crystal to obtain an anhydrous iron phosphate material.

The oxidant comprises at least one of hydrogen peroxide, ozone, sodium persulfate, ammonium persulfate, sodium hypochlorite, sodium ferrate and oxygen.

The step of aging the amorphous iron phosphate precipitate to induce crystallization comprises: dispersing the amorphous iron phosphate precipitate in an aging solution to induce a crystallization reaction;

wherein the aging solution is a phosphoric acid solution containing a surfactant;

the surfactant comprises at least one of a lignin sulfonate and a naphthalene sulfonate-formaldehyde condensate; wherein the lignin sulfonate comprises at least one of sodium lignin sulfonate and ammonium lignin sulfonate; and the naphthalene sulfonate-formaldehyde condensate comprises at least one of a β-naphthalene sulfonate sodium-formaldehyde condensate, a benzylnaphthalene sulfonate sodium-formaldehyde condensate, an α-methylnaphthalene sulfonate sodium-formaldehyde condensate, and an alkylbenzene sulfonate sodium-formaldehyde condensate;

The crystallization reaction is conducted at a stirring speed of 100 rpm-300 rpm.

In an alternative embodiment, the synthesis reaction comprises at least one of the following features:

feature 1: the iron source solution is a soluble ferrous salt solution;

feature 2: the phosphorus source comprises at least one of phosphoric acid, sodium dihydrogen phosphate, sodium monohydrogen phosphate, ammonium dihydrogen phosphate, and ammonium monohydrogen phosphate; and

feature 3: the pH regulator comprises at least one of ammonia water, sodium hydroxide, sulfuric acid, hydrochloric acid, and nitric acid.

In an alternative embodiment, the iron source comprises at least one of ferrous sulfate, ferrous chloride, ferrous nitrate, ferrous oxalate, and ferrous acetate.

In an alternative embodiment, the oxidant comprises hydrogen peroxide and air.

In an alternative embodiment, the synthesis reaction further comprises at least one of the following features:

feature 4: a concentration of the iron source solution is 0.8 mol/L-1.5 mol/L; and

feature 5: a concentration of the phosphorus source solution is 0.85 mol/L-3 mol/L.

In an alternative embodiment, the iron source and the phosphorus source are fed at a molar ratio of P to Fe of 1.05:1 to 1.5:1.

In an alternative embodiment, a usage amount of the oxidant is not less than a theoretical amount required to completely oxidize all $Fe^{2+}$ in the iron source to $Fe^{3+}$.

In an alternative embodiment, the synthesis reaction further comprises at least one of the following features:

feature 6: a pH value of the synthesis reaction is 1-2.5;

feature 7: the synthesis reaction is conducted at a temperature of 50°C-70 °C;

feature 8: the synthesis reaction is conducted for 1 h-4 h; and

feature 9: the synthesis reaction is conducted at a stirring speed of 400 rpm-800 rpm.

In an alternative embodiment, bubbles generated by a micro-nano bubble generator have particle sizes of 200 nm-4.0 μm.

In an alternative embodiment, a content rate of the bubbles generated by the micro-nano bubble generator is 10%-30% by volume percentage.

In an alternative embodiment, the crystallization reaction comprises at least one of the following features:

feature 10: a pH value of the aging solution is 1-2.5;

feature 11: a concentration of the surfactant contained in the aging solution is 1 wt%-5 wt%; and

feature 12: the amorphous iron phosphate precipitate and the aging solution are fed at a ratio of 1 g:100 mL to 1 g:300 mL.

In an alternative embodiment, the crystallization reaction further comprises at least one of the following features:

feature 13: the crystallization reaction is conducted at a temperature of 80°C-90°C; and

feature 14: the crystallization reaction is conducted for 1 h-3 h.

In an alternative embodiment, the calcining comprises at least one of the following features:

feature 15: the calcining is conducted at a temperature of 600°C-750°C;

feature 16: the calcining is conducted for 2 h-3 h; and

feature 17: a heating rate during the calcining process is 3°C/min-5°C/min.

In a third aspect, the present disclosure provides a cathode material, which is prepared by mixing and sintering the above iron phosphate material with a lithium source and a carbon source.
In an alternative embodiment, the cathode material has at least one of the following features:

feature 18: a $D_{50}$ of the cathode material is 0.87 $\mu$m-1.17 $\mu$m;

feature 19: a specific surface area of the cathode material is 12.13 $cm^2$/g-12.85 $cm^2$/g;

feature 20: a 0.1 C charge specific capacity of the cathode material is no less than 161.5 mAh/g;

feature 21: a 0.1 C discharge specific capacity of the cathode material is no less than 158.5 mAh/g; and

feature 22: a 1 C discharge specific capacity of the cathode material is no less than 143.0 mAh/g.

In an alternative embodiment, the 0.1 C charge specific capacity of the cathode material is 161.7 mAh/g-163.5 mAh/g.
In an alternative embodiment, the 0.1 C discharge specific capacity of the cathode material is 158.8 mAh/g-161.6 mAh/g.
In an alternative embodiment, the 1 C discharge specific capacity of the cathode material is 143.3 mAh/g-149.0 mAh/g.
In a fourth aspect, the present disclosure provides a cathode sheet, wherein the cathode sheet comprises an active material, and the active material comprises the cathode material of the above embodiments.
In a fifth aspect, the present disclosure provides a battery comprising the cathode sheet of the above embodiments.
The beneficial effects of the present disclosure are as follows.
In the present disclosure, by limiting the equivalent particle size of the primary particles, the $D_{50}$ of the secondary particles, and the hardness index of the iron phosphate material to specific ranges, the iron phosphate material meeting the above features has a loose structure and lower overall hardness. When used for preparing cathode materials, it can improve the efficiency of grinding with the lithium source, and the wear on the equipment is reduced. The prepared cathode material has good electrochemical performance, facilitating further preparation of batteries and electrical devices with excellent electrochemical performance.

**BRIEF DESCRIPTION OF THE DRAWINGS**

In order to illustrate the technical scheme of the examples of the present disclosure more clearly, the accompanying drawings in the examples will be briefly introduced hereafter. It should be understood that the following accompanying drawings only show some examples of the present disclosure, and should not be interpreted as limiting the scope. Other relevant accompanying drawings can also be obtained by those of ordinary skill in the art from these accompanying drawings without creative efforts.

FIG. 1 is a SEM image of an anhydrous iron phosphate prepared in Example 1;

FIG. 2 is a SEM image of an anhydrous iron phosphate prepared in Comparative Example 1;

FIG. 3 is a SEM image of an anhydrous iron phosphate prepared in Comparative Example 2;

FIG. 4 is a SEM image of an anhydrous iron phosphate prepared in Comparative Example 3;

FIG. 5 is a SEM image of an anhydrous iron phosphate prepared in Comparative Example 4; and

FIG. 6 is an XRD diagram of the anhydrous iron phosphates prepared in Example 1 and Comparative Examples 1-4.

**DETAILED DESCRIPTION**

In order to make the objectives, technical schemes and advantages of the examples of the present disclosure more clearly, the technical scheme of the examples of the present disclosure will be described clearly and completely below. If no specific conditions are specified in the examples, the examples will be carried out according to conventional conditions or the conditions recommended by the manufacturer. All of the used agents or instruments which are not specified with manufacturers are conventional commercially-available products.

An iron phosphate material, a preparation method therefor and use thereof as provided by the present disclosure are described in detail below.

The present disclosure provides an iron phosphate material with a general formula of $FePO_4$.

The iron phosphate material is composed of secondary particles formed by agglomeration of primary particles, an equivalent particle size of the primary particles is 20 nm-600 nm, the equivalent particle size is the diameter of a standard sphere having the same volume as the primary particles; and the secondary particles have a $D_{50}$ of 5 $\mu$m-20 $\mu$m; and

a hardness index of the iron phosphate material is $\leq$ 5; the hardness $\text{index} = \dfrac{\bar{L}}{V_p}$, wherein $\bar{L}$ is an average aspect ratio of the primary particles, which refers to a ratio of an average length of the longest axis to an average length of the shortest axis of the primary particles; and $V_p$ is a specific pore volume of the iron phosphate material expressed in $cm^3/g$.

Wherein, the equivalent diameter of the primary particles can be measured and calculated by scanning electron microscopy (SEM). Specifically, the volume V of the primary particles is calculated by measuring the morphological parameters of the primary particles in an SEM image of the iron phosphate material, and then the equivalent particle size d is derived according to the volume formula of a standard sphere: $V = 4/3\pi(d/2)^3$.

Wherein, the $D_{50}$ refers to particle size of the secondary particles corresponding at a cumulative distribution ratio of 50%.

Wherein, the $\bar{L}$ refers to the ratio of the average length of the longest axis to the average length of the shortest axis of the primary particles. The average length of the longest axis is obtained by dividing a sum of the lengths of the longest axes of the primary particles by the number of the primary particles; and the average length of the shortest axis is obtained by dividing a sum of the lengths of the shortest axes of the primary particles by the number of the primary particles. The $\bar{L}$ can be measured and calculated by SEM.

Wherein, the hardness index is dimensionless and has a value of $\leq$ 5.

Wherein, the $V_p$ represents a pore volume per unit mass expressed in $cm^3/g$. It can be calculated from a nitrogen adsorption-desorption isotherm curve.

The iron phosphate material of the present disclosure is an anhydrous iron phosphate after subjecting to calcination and drying. Since the chemical composition of the anhydrous iron phosphate is fixed and the surface properties of the crystalline anhydrous iron phosphate after subjecting to calcination and drying are almost the same, the grindability of the iron phosphate material is related to the properties of the primary particles and the secondary particles formed by agglomeration of the primary particles.

In terms of effect of the particle size of the primary particles on the grindability, on one hand, the smaller the particle size of the primary particles, the larger the specific surface area of the material, and the higher the specific surface energy of the material, the easier it is to agglomerate, which hinders crushing; on the other hand, overly large primary particles are not conducive to the preparation of cathode materials with larger specific surface areas, and it is also difficult to grind overly large iron phosphate particles into small particle sizes. Therefore, the particle size of the primary particles needs to be controlled within an appropriate range.

In terms of effect of the morphology of the primary particles on the grindability, the more spherical the primary particles are, the smaller their specific surface areas, the lower their surface energy, and the lower their agglomeration tendency. Moreover, the more spherical the primary particles are, the smaller the contact area among the primary particles is, making crushing easier.

In terms of effect of the pore structure of the secondary particles on the grindability, the larger the volume of the pores in the secondary particles, the looser the material, making crushing easier.

Although both the particle size and morphology of the primary particles have an impact on the specific pore volume of the material, the specific pore volume of the material is also affected by the particle size distribution width of the primary particles and the preparation method. Specifically, the wider the particle size distribution, the easier it is for the material to pack more densely according to the packing principle (particles with small particle sizes fill the pores formed by particles with large particle sizes). Moreover, the preparation method affects the intensity and frequency of collisions among the particles. For example, increased temperature and stirring speed intensify the collision among the particles, thereby promoting the agglomeration and enhancing packing density of the primary particles.

That is, the grindability of the material cannot be evaluated comprehensively from the specific pore volume, specific surface area or porosity of the material. For example, the porosity is a ratio of the pore volume to the volume of the material, and the specific pore volume is a ratio of the pore volume to the mass of the material, both of which are similar. On one hand, the mass of the material is more accurately measured than the volume of the material. In the prior art, the porosity is generally calculated as a ratio of the pore area to the solid area in the cross-section of the material observed by SEM. On the other hand, taking an extreme case as an example, spherical primary particles (which can be regarded as single crystals) and disc-shaped primary particles (which can be regarded as single crystals) of the same mass (or volume) are used as shell materials to assemble a hollow material with the same cavity area, that is, the surface area of the spherical inner cavity is fixed. Since the total surface area of the disc-shaped particles is larger than that of the spherical particles, the disc-shaped particles have a larger overlapping area with each other and are therefore more difficult to crush. Moreover, for the specific surface area of the secondary particles, i.e., the sum of the surface areas per unit mass of the material, e.g. for iron phosphate materials with equal mass (or volume), the disc-shaped particles have a larger specific surface area than that of the spherical particles, but the disc-shaped particles are more difficult to crush.

The present disclosure creatively proposes combining the equivalent particle size of the primary particles, the $D_{50}$ of the secondary particles and the hardness index of the iron phosphate material to characterize the grindability of the material. The characterization result is consistent with the actual grindability of the material.

Specifically, by controlling the equivalent particle size of the primary particles of the iron phosphate material to 20 nm-600 nm, controlling the $D_{50}$ of the secondary particles to 5 $\mu$m-20 $\mu$m, and controlling the hardness index of the iron phosphate material to $\leq 5$, the iron phosphate material meeting the above features has a loose structure and a low overall hardness. When used for preparing a cathode material, the efficiency of grinding with the lithium source can be improved, and the wear on the equipment is reduced. The prepared cathode material has good electrochemical performance, facilitating further preparation of batteries and electrical devices with excellent electrochemical performance.

In some alternative embodiments, the $V_p$ of the iron phosphate material is 0.3 cm$^3$/g-1.3 cm$^3$/g, for example, it may be 0.72 cm$^3$/g-1.28 cm$^3$/g, e.g. 0.72 cm$^3$/g, 0.84 cm$^3$/g, 0.88 cm$^3$/g, 0.91 cm$^3$/g, 1.05 cm$^3$/g, 1.19 cm$^3$/g or 1.28 cm$^3$/g, etc., or other values within the range of 0.72 cm$^3$/g-1.28 cm$^3$/g.

In some alternative embodiments, the average aspect ratio of the primary particles of the iron phosphate material does not exceed 3.5, for example, it may be 1.11-3.14, e.g. 1.11, 1.25, 1.28, 1.31, 1.33, 2.34 or 3.14, etc., or other values within the range of 1.11-3.14. The average aspect ratio of the primary particles can reflect their morphology. The closer the average aspect ratio is to 1, the more the primary particles approximate standard spheres; and the larger the average aspect ratio is, the more plate-like the primary particles are.

In some alternative embodiments, the hardness index of the iron phosphate material may have a value of 0.98-3.57, e.g. 0.98, 1.08, 1.22, 1.27, 1.82, 2.79 or 3.57, etc., or other values within the range of 0.98-3.57.

In some alternative embodiments, the equivalent particle size of the primary particles of the iron phosphate material may be 254 nm-411 nm, e.g., 254 nm, 327 nm, 372 nm, 395 nm, 396 nm, 405 nm or 411 nm, etc., or other values within the range of 254 nm-411 nm.

In some alternative embodiments, the $D_{50}$ of the secondary particles may be 8.74 $\mu$m-10.28 $\mu$m, e.g., 8.74 $\mu$m, 9.84 $\mu$m, 10.06 $\mu$m, 10.11 $\mu$m, 10.12 $\mu$m, 10.28 $\mu$m or 11.2 $\mu$m, etc., or other values within the range of 8.74 $\mu$m-10.28 $\mu$m.

In view of the above, the iron phosphate material provided by the present disclosure is composed of secondary particles formed by agglomeration of primary particles. The primary particles are approximately spherical and have a uniform particle size distribution. The secondary particles obtained by agglomeration have a relatively loose structure, high crystallinity of crystals, and a low overall hardness, which are suitable for mixing and grinding with raw materials such as lithium sources to prepare cathode materials such as lithium iron phosphate.

Accordingly, the present disclosure further provides a method for preparing the above iron phosphate material, comprising the following steps: mixing an iron source solution with a phosphorus source solution, an oxidant, and a pH regulator for a synthesis reaction, and collecting an amorphous iron phosphate precipitate obtained from the reaction; aging the amorphous iron phosphate precipitate to induce crystallization so as to obtain an iron phosphate dihydrate crystal; and calcining the iron phosphate dihydrate crystal to obtain an anhydrous iron phosphate material.

In some alternative embodiments, the iron source solution is a soluble ferrous salt solution, wherein the iron source may comprise at least one of ferrous sulfate, ferrous chloride, ferrous nitrate, ferrous oxalate, and ferrous acetate, by way of example without limitation.

In some alternative embodiments, a concentration of the iron source solution may be 0.8 mol/L-1.5 mol/L, e.g., 0.8 mol/L, 0.9 mol/L, 1.0 mol/L, 1.1 mol/L, 1.2 mol/L, 1.3 mol/L, 1.4 mol/L or 1.5 mol/L, etc., or other values within the range of 0.8 mol/L-1.5 mol/L.

The oxidant may comprise at least one of hydrogen peroxide, ozone, sodium persulfate, ammonium persulfate, sodium hypochlorite, sodium ferrate, oxygen, and air, by way of example without limitation.

A usage amount of the oxidant is not less than a theoretical amount required to completely oxidize all $Fe^{2+}$ in the iron source to $Fe^{3+}$.

In some embodiments, the oxidant comprises both a gaseous oxidizing substance and a liquid oxidizing substance; for example, the oxidant contains both hydrogen peroxide and air. In this way, the air may contact with the mixed solution of the iron source solution and the phosphorus source solution via a microbubble generator, and then mixing a resulting mixture with hydrogen peroxide and a pH regulator, which is beneficial to greatly increase the contact area and time between the air and a liquid phase and improve the oxidation efficiency. In addition, in this way, the gas-liquid interface of the bubbles has higher surface energy, which is more conducive to adsorption on the surfaces of agglomerates, making the agglomerates looser.

For example, bubbles generated by a micro-nano bubble generator may have particle sizes of 200 nm-4.0 μm. A content rate of the bubbles generated by the micro-nano bubble generator may be 10%-30%, e.g. 10%, 15%, 20%, 25%, 30%, etc., by volume percentage.

The phosphorus source comprises at least one of phosphoric acid, sodium dihydrogen phosphate, sodium monohydrogen phosphate, ammonium dihydrogen phosphate, and ammonium monohydrogen phosphate, by way of example without limitation.

A concentration of the phosphorus source solution may be 0.85 mol/L-3 mol/L, e.g. 0.85 mol/L, 1 mol/L, 1.5 mol/L, 2 mol/L, 2.5 mol/L or 3 mol/L, etc., or other values within the range of 0.85 mol/L-3 mol/L.

The iron source and the phosphorus source can be fed at a molar ratio of P to Fe of 1.05:1 to 1.5:1 (e.g. 1.05:1, 1.1:1, 1.15:1, 1.2:1, 1.25:1, 1.3:1, 1.35:1, 1.4:1, 1.45:1, or 1.5:1, etc.).

The pH regulator comprises at least one of ammonia water, sodium hydroxide, sulfuric acid, hydrochloric acid, and nitric acid, by way of example without limitation.

In the present disclosure, a mixing order and a mixing manner of the raw materials are not particularly limited, and the mixing manner comprises, but is not limited to, titration mixing, one-pot mixing, or parallel flow mixing, etc.

In some embodiments, first mixing the iron source solution with the phosphorus source solution to obtain a mixed solution; and then adding the mixed solution, the oxidant, and the pH regulator into a reaction vessel in parallel using a constant flow pump. The pH regulator is used for controlling a pH value of the synthesis reaction.

In some embodiments, the pH value of the synthesis reaction is 1-2.5, e.g. 1, 1.5, 2 or 2.5, etc., or other values within the range of 1-2.5.

The synthesis reaction may be conducted at a temperature of 50°C-70°C, e.g. 50°C, 55°C, 60°C, 65°C or 70°C, etc., or other values within the range of 50°C-70°C.

The above temperatures for the synthesis reaction are relatively low, which is conducive to the formation of loosely structured agglomerates.

The synthesis reaction may be conducted for 1 h-4 h, e.g. 1 h, 1.5 h, 2 h, 2.5 h, 3 h, 3.5 h or 4 h, etc., or other values within the range of 1 h-4 h.

A stirring speed for the synthesis reaction may be 400 rpm-800 rpm, e.g. 400 rpm, 500 rpm, 600 rpm, 700 rpm or 800 rpm, etc., or other values within the range of 400 rpm-800 rpm.

The above high stirring speed helps to further loosen the agglomerate structure and reduce the particle size, which in turn helps to improve the crystallization efficiency in a crystallization stage, so as to obtain crystal grains with relatively uniform particle size and high crystallinity, thereby mitigating the agglomeration of the primary particles.

In some embodiments, the step of aging the amorphous iron phosphate precipitate to induce crystallization comprises: dispersing the amorphous iron phosphate precipitate in an aging solution to induce a crystallization reaction; wherein the aging solution is a phosphoric acid solution containing a surfactant.

A fed ratio of the amorphous iron phosphate precipitate to the aging solution may be 1 g:100 mL to 1 g:300 mL, e.g., 1 g:100 mL, 1 g:150 mL, 1 g:200 mL, 1 g:250 mL or 1 g:300 mL, etc., or other values within the range of 1 g:100 mL to 1 g:300 mL. The amorphous iron phosphate precipitate has a solid content of 80 wt%-90 wt% on a wet basis.

A pH value of the above aging solution may be 1-2.5, e.g., 1, 1.5, 2 or 2.5, etc., or other values within the range of 1-2.5.

A concentration of the surfactant contained in the aging solution may be 1 wt%-5 wt%, e.g., 1 wt%, 2 wt%, 3 wt%, 4 wt% or 5 wt%, etc., or other values within the range of 1 wt%-5 wt%.

By way of example, the surfactant may comprise at least one of a lignin sulfonate and a naphthalene sulfonate-formaldehyde condensate. Wherein, the lignin sulfonate may comprise at least one of sodium lignin sulfonate and ammonium lignin sulfonate, by way of example without limitation. The naphthalene sulfonate-formaldehyde condensate may comprise at least one of a β-naphthalene sulfonate sodium-formaldehyde condensate, a benzylnaphthalene sulfonate sodium-formaldehyde condensate, an α-methylnaphthalene sulfonate sodium-formaldehyde condensate, and an alkylbenzene sulfonate sodium-formaldehyde condensate, by way of example without limitation.

By adding an anionic polymer surfactant at the crystallization stage, anions are adsorbed on the surfaces of positively charged iron phosphate particles. The electrostatic effect and the steric hindrance effect inhibit the agglomeration among the particles and induce the primary particles to form spherical crystals, which is conducive to loosening the structure of the secondary particles. Moreover, since the surfactant contains numerous rigid benzene rings, it can act as a pore-forming agent during calcination to increase the porosity of the iron phosphate material.

In some embodiments, the crystallization reaction may be conducted at a temperature of 80°C-90°C, e.g., 80°C, 85°C or 90°C, etc., or other values within the range of 80°C-90°C.

The crystallization reaction may be conducted for 1 h-3 h, e.g., 1 h, 1.5 h, 2 h, 2.5 h or 3 h, etc., or other values within the range of 1 h-3 h.

A stirring speed for the crystallization reaction may be 100 rpm-300 rpm, e.g., 100 rpm, 150 rpm, 200 rpm, 250 rpm or 300 rpm, etc., or other values within the range of 100 rpm-300 rpm.

The stirring speed for the aging-induced crystallization reaction is controlled at a low level to avoid intense collisions among the particles, which would otherwise promote agglomeration.

After completing the crystallization reaction, filtering and washing a reaction mixture, and drying a resulting filter cake.

The above drying may be performed with normal pressure oven drying, vacuum oven drying or spray drying, etc. In some embodiments, spray drying is adopted to dry powder, which is conducive to reducing the degree of powder agglomeration.

In some embodiments, the calcining may be conducted at a temperature of 600°C-750°C, e.g., 600°C, 650°C, 700°C or 750°C, etc., or other values within the range of 600°C-750°C.

The calcining may be conducted for 2 h-3 h, e.g., 2 h, 2.5 h or 3 h, etc., or other values within the range of 2 h-3 h.

A heating rate during the calcining process may be 3°C/min-5°C/min, e.g., 3°C/min, 3.5°C/min, 4°C/min, 4.5°C/min or 5°C/min, etc., or other values within the range of 3°C/min-5°C/min.

In view of the above, in the present disclosure, a ferrous salt is used as the iron source to prepare the iron phosphate material by adopting an oxidative precipitation-crystallization method. In the preparation process, various means are adopted to regulate the morphology, particle size and distribution of the primary particles and the agglomeration structure of the secondary particles in the iron phosphate material, so that the primary particles are approximately spherical with a particle size range of 20 nm-600 nm and a relatively uniform distribution, the secondary particles have a loose structure with a $D_{50}$ of 5 μm-20 μm, and the hardness index of the iron phosphate material is ≤ 5.

Moreover, the present disclosure further provides a cathode material, which is prepared by mixing and sintering the above iron phosphate material with a lithium source and a carbon source.

Wherein, the lithium source may comprise lithium carbonate, etc., by way of example without limitation; and the carbon source may comprise glucose, etc., by way of example without limitation.

In some exemplary embodiments, the cathode material may be prepared with reference to the following method: mixing the iron phosphate material with lithium carbonate and glucose in a molar ratio of n(iron element in the iron phosphate material):n(Li):n(glucose) = 1:1.04:0.05 to obtain a mixed raw material; mixing the mixed raw material with ethanol and then grinding a resulting mixture in a grinder for 6 h to obtain a slurry; drying the slurry in a vacuum oven at 80°C for 4 h to obtain a dry material; and calcining the dry material at 750°C under a nitrogen atmosphere for 9 h, and sieving to obtain the lithium iron phosphate cathode material.

In some embodiments, a $D_{30}$ of the cathode material is 0.87 μm-1.17 μm, e.g., 0.87 μm, 0.95 μm, 1.05 μm, 1.11 μm, 1.12 μm, 1.14 μm or 1.17 μm, etc., or other values within the range of 0.87 μm-1.17 μm.

In some embodiments, a specific surface area of the cathode material is 12.13 cm$^2$/g-12.85 cm$^2$/g, e.g., 12.13 cm$^2$/g, 12.21 cm$^2$/g, 12.28 cm$^2$/g, 12.47 cm$^2$/g, 12.67 cm$^2$/g, 12.85 cm$^2$/g, or 13.24 cm$^2$/g, etc., or other values within the range of 12.13 cm$^2$/g-12.85 cm$^2$/g.

In some embodiments, a 0.1 C charge specific capacity of the cathode material is no less than 161.5 mAh/g, for example, it may be 161.7 mAh/g-163.5 mAh/g, e.g., 161.7 mAh/g, 162.2 mAh/g, 162.7 mAh/g, 162.8 mAh/g, 163.2 mAh/g or 163.5 mAh/g, etc., or other values within the range of 161.7 mAh/g-163.5 mAh/g.

In some embodiments, a 0.1 C discharge specific capacity of the cathode material is no less than 158.5 mAh/g, for example, it may be 158.8 mAh/g-161.6 mAh/g, e.g., 158.8 mAh/g, 159.0 mAh/g, 159.4 mAh/g, 161.3 mAh/g, 161.5 mAh/g or 161.6 mAh/g, etc., or other values within the range of 158.8 mAh/g-161.6 mAh/g.

In some embodiments, a 1 C discharge specific capacity of the cathode material is no less than 143.0 mAh/g, for example, it may be 143.3 mAh/g-149.0 mAh/g, e.g., 143.3 mAh/g, 144.1 mAh/g, 144.8 mAh/g, 147.3 mAh/g, 148.1 mAh/g, 148.8 mAh/g or 149.0 mAh/g, etc., or other values within the range of 143.3 mAh/g-149.0 mAh/g.

Moreover, the present disclosure further provides a cathode sheet, wherein the cathode sheet comprises an active material, and the active material comprises the above cathode material.

The present disclosure further provides a battery cell comprising the above cathode sheet.

As an example, the above battery cell can be used for, but are not limited to, electrical devices such as vehicles, ships, or aircrafts.

The present disclosure further provides a battery comprising the above battery cell.

The present disclosure further provides an electrical device comprising the above battery cell and/or battery. As an example, the electrical device may be, but is not limited to, a mobile phone, a tablet, a laptop computer, an electric toy, an electric tool, an electric vehicle, an electric car, a ship, a spacecraft, etc. Wherein, the electric toy may comprise fixed or mobile electric toys, e.g., game consoles, electric car toys, electric ship toys, and electric airplane toys, etc.; and the spacecraft may comprise airplanes, rockets, space shuttles, and spaceships, etc.

The features and performances of the present disclosure are further described in detail below in conjunction with the examples.

Example 1

The present example provided an anhydrous iron phosphate, the preparation method of which comprised the following steps:

Step (1): a mixed solution was formulated according to a fed ratio of an iron source and a phosphorus source of $n(P):n(Fe)$ of 1.3:1, wherein the iron source was an aqueous solution of ferrous sulfate heptahydrate with a ferrous ion concentration of 1.5 mol/L, and the phosphorus source was a phosphoric acid solution with a phosphate ion concentration of 1.92 mol/L.

Step (2): the above mixed solution, hydrogen peroxide with a concentration of 0.6 mol/L, and ammonia water with a concentration of 2 mol/L were added into a reaction kettle in parallel using a constant flow pump. Flow rates of the mixed solution and the hydrogen peroxide were both 120 mL/h, and a flow rate of the ammonia water was set to maintain a pH of a resulting reaction solution at $1.2 \pm 0.1$. The reaction was carried out at a temperature maintained at 60°C and a stirring speed of 600 rpm for 2 h. After the reaction was completed, a resulting reaction product was filtered, washed with deionized water to obtain an amorphous iron phosphate precipitate (a wet material with a solid content of 87.6 wt%).

Wherein, the mixed solution was allowed to contact with an air via a microbubble generator, and then entered the reaction kettle. Bubbles generated by a micro-nano bubble generator had particle sizes of 200 nm-4.0 $\mu$m and a bubble content rate of 20 vt%.

Step (3): the amorphous iron phosphate precipitate was uniformly dispersed in an aging solution for aging to induce a crystallization reaction. After the reaction was completed, a resulting reaction product was filtered and washed with deionized water, and a resulting filter cake was spray-dried to obtain iron phosphate dihydrate crystals.

Wherein, the aging solution was a phosphoric acid solution containing ammonium lignin sulfonate, a pH value of the aging solution was 2, and a concentration of the ammonium lignin sulfonate in the aging solution was 2.5 wt%. The amorphous iron phosphate precipitate and the aging solution were fed at a ratio of 1 g:200 mL. The crystallization reaction was conducted at a temperature of 90°C and a stirring speed of 200 rpm for 2 h.

Step (4): the iron phosphate dihydrate crystals were calcined to obtain the anhydrous iron phosphate.

The calcining was conducted at a temperature of 700°C with a heating rate of 4°C/min for a calcination time of 2 h.

Example 2

The present example differed from Example 1 in that: the concentration of the ammonium lignin sulfonate in the aging solution was 1 wt%.

Example 3

The present example differed from Example 1 in that: the concentration of the ammonium lignin sulfonate in the aging solution was 5 wt%.

Example 4

The present example differed from Example 1 in that: the bubbles generated by the micro-nano bubble generator had particle sizes of 200 nm-4.0 $\mu$m, and the bubble content rate was 10 vt%.

Example 5

The present example differed from Example 1 in that: the bubbles generated by the micro-nano bubble generator had particle sizes of 200 nm-4.0 μm, and the bubble content rate was 30 vt%.

Example 6

The present example provided an anhydrous iron phosphate, the preparation method of which comprised the following steps.

Step (1): a mixed solution was formulated according to a fed ratio of an iron source and a phosphorus source of n(P):n(Fe) of 1.05:1, wherein the iron source was an aqueous solution of ferrous chloride with a ferrous ion concentration of 0.8 mol/L, and the phosphorus source was a sodium dihydrogen phosphate solution with a phosphate ion concentration of 0.85 mol/L.

Step (2): the above mixed solution, sodium hypochlorite with a concentration of 1 mol/L, and a sodium hydroxide solution with a concentration of 1 mol/L were added into a reaction kettle in parallel using a constant flow pump. Flow rates of the mixed solution and the sodium hypochlorite were both 200 mL/h, and a flow rate of the sodium hydroxide solution was set to maintain a pH of a resulting reaction solution at 1.1 ± 0.1. The reaction was carried out at a temperature maintained at 70°C and a stirring speed of 400 rpm for 1 h. After the reaction was completed, a resulting reaction product was filtered, washed with deionized water to obtain an amorphous iron phosphate precipitate (a wet material with a solid content of 88.1 wt%).

Wherein, the mixed solution was allowed to contact with an air via a microbubble generator, and then entered the reaction kettle. Bubbles generated by a micro-nano bubble generator had particle sizes of 200 nm-4.0 μm and a bubble content rate of 30 vt%.

Step (3): the amorphous iron phosphate precipitate was uniformly dispersed in an aging solution for aging to induced a crystallization reaction. After the reaction was completed, a resulting reaction product was filtered and washed with deionized water, and a resulting filter cake was vacuum-dried at 100°C for 12 h to obtain iron phosphate dihydrate crystals.

Wherein, the aging solution was a phosphoric acid solution containing a β-naphthalene sulfonate sodium-formaldehyde condensate, a pH value of the aging solution was 1, and a concentration of the β-naphthalene sulfonate sodium-formaldehyde condensate in the aging solution was 2.5 wt%. The amorphous iron phosphate precipitate and the aging solution were fed at a ratio of 1 g:300 mL. The crystallization reaction was conducted at a temperature of 80°C and a stirring speed of 100 rpm for 1 h.

Step (4): the iron phosphate dihydrate crystals were calcined to obtain the anhydrous iron phosphate.

The calcining was conducted at a temperature of 700°C with a heating rate of 4°C/min for a calcination time of 2 h.

Example 7

Step (1): a mixed solution was formulated according to a fed ratio of an iron source and a phosphorus source of n(P):n(Fe) of 1.5:1, wherein the iron source was an aqueous solution of ferrous nitrate with a ferrous ion concentration of 2 mol/L, and the phosphorus source was an ammonium monohydrogen phosphate solution with a phosphate ion concentration of 3 mol/L.

Step (2): the above mixed solution, ammonium persulfate with a concentration of 0.8 mol/L, and ammonia water with a concentration of 4 mol/L were added into a reaction kettle in parallel using a constant flow pump. Flow rates of the mixed solution and the ammonium persulfate were both 150 mL/h, and a flow rate of the ammonia water was set to maintain a pH of a resulting reaction solution at 1.5 ± 0.1. The reaction was carried out at a temperature maintained at 50°C and a stirring speed of 800 rpm for 4 h. After the reaction was completed, a resulting reaction product was filtered, washed with deionized water to obtain an amorphous iron phosphate precipitate (a wet material with a solid content of 85.9 wt%).

Wherein, the mixed solution was allowed to contact with an air via a microbubble generator, and then entered the reaction kettle. Bubbles generated by a micro-nano bubble generator had particle sizes of 200 nm-4.0 μm and a bubble content rate of 20 vt%.

Step (3): the amorphous iron phosphate precipitate was uniformly dispersed in an aging solution for aging to induced a crystallization reaction. After the reaction was completed, a resulting reaction product was filtered and washed with deionized water, and a resulting filter cake was vacuum-dried at 100°C for 12 h to obtain iron phosphate dihydrate crystals.

Wherein, the aging solution was a phosphoric acid solution containing a α-methylnaphthalene sulfonate sodium-formaldehyde condensate, a pH value of the aging solution was 1, and a concentration of the α-methylnaphthalene sulfonate sodium-formaldehyde condensate in the aging solution was 1 wt%. The amorphous iron phosphate precipitate and the aging solution were fed at a ratio of 1 g:100 mL. The crystallization reaction was conducted at a temperature of 80°C and a stirring speed of 300 rpm for 3 h.

Step (4): the iron phosphate dihydrate crystals were calcined to obtain the anhydrous iron phosphate.

The calcining was conducted at a temperature of 700°C with a heating rate of 4°C/min for a calcination time of 2 h.

Comparative Example 1

The present comparative example differed from Example 1 in that: the air was introduced into a liquid phase of the reaction kettle in a conventional air intake manner at a flow rate of 1 mL/min.

Comparative Example 2

The present comparative example differed from Example 1 in that: sodium hexadecylbenzenesulfonate was used instead of ammonium lignin sulfonate.

Comparative Example 3

The present comparative example differed from Example 1 in that: hydroxymethyl cellulose was used instead of ammonium lignin sulfonate.

Comparative Example 4

The present comparative example differed from Example 1 in that: the aging solution did not contain the surfactant.

Comparative Example 5

The present comparative example differed from Example 1 in that: the oxidant was hydrogen peroxide only, without containing the air.

Comparative Example 6

The present comparative example differed from Example 1 in that: the stirring speed for the crystallization reaction in the step (3) was 400 rpm.

Test Example 1

The iron phosphate materials prepared in Examples 1-7 and Comparative Examples 1-6 were subjected to the following performance test.

(1) The microstructures of the materials were observed using a JEOL JSM-6490LV scanning electron microscope, and the particle size and average aspect ratio of the primary particles in the scanning electron micrograph were analyzed using ImageJ. The average diameter of the primary particles was the number-average value of the equivalent particle size of the primary particles, and the equivalent particle size referred to the diameter of a sphere with the same volume as the primary particle. The average aspect ratio of the primary particles referred to a ratio of an average length of the longest axis to an average length of the shortest axis of the primary particles, wherein the average length of the longest axis was obtained by dividing a sum of the lengths of the longest axes of the primary particles by the number of the primary particles, and the longest axis referred to the length of the longest diagonal in the image; the average length of the shortest axis was obtained by dividing a sum of the lengths of the shortest axes of the primary particles by the number of the primary particles, and the shortest axis referred to the length of the shortest diagonal in the image. For each sample, 50 primary particles were randomly selected for measurement.

(2) Particle size $D_{50}$ was tested using a MS3000 laser particle size analyzer.

(3) Determination of specific surface area and specific pore volume was conducted according to GB/T 21650.2-2008 "Pore size distribution and porosity of solid materials by mercury intrusion porosimetry and gas adsorption - Part 2: Analysis of mesopores and macropores by gas adsorption". The powder sample was tested with a Autosorb IQ2 automated specific surface area and pore size analyzer to obtain a nitrogen adsorption-desorption curve at a constant temperature of -196°C and a pressure of 0.005 MPa-0.100 MPa. The data at stages with medium and low pressures was processed with a BET formula to calculate the specific surface area, and processed with a BJH model to calculate the specific pore volume.

(4) Determination of grinding efficiency: Anhydrous iron phosphate of the same mass was weighed and subjected to dry ball milling. Samples were taken at several times to measure the particle sizes and calculate the particle size distribution width (span = ($D_{90}$-$D_{10}$) / $D_{50}$). The ball milling conditions were as follows: a frequency of 30 Hz, 1-mm zirconia beads for ball milling with a bead-to-anhydrous iron phosphate volume ratio of 1:1, and a rotation speed of 600 rpm.

(5) XRD: The crystalline phase and crystal structure of the material were investigated using an X-ray powder diffractometer (XRD, Rigaku D/max-2600PC, Japan). During the test, the $K_\alpha$ ray of Cu was used with a wavelength $\lambda$ of 0.154056 nm, a voltage of 40 kV, a current of 40 mA, and a scanning range of 2θ from 10° to 80°. The XRD test results were analyzed using Jade 6 software.

(6) The Fe and P contents in $FePO_3 \cdot 2H_2O$ were tested by titration analysis, specifically as follows: a sample was weighed and dissolved completely with hydrochloric acid. The $Fe^{3+}$ in the solution was reduced to $Fe^{2+}$ with a $SnCl_2$ solution. Then a resulting solution was added with a saturated solution of mercuric chloride, and titrated with a $K_2Cr_2O_7$ standard solution using sodium diphenylamine sulfonate as an indicator to calculate the iron content of the sample. The sample was dissolved with hydrochloric acid, and then added with a Quimociac Reagent and nitric acid, resulting in a yellow precipitate. The precipitate was filtered, and then dissolved by addition of NaOH. Excess NaOH was then titrated with HCl to calculate the phosphorus content of the sample.

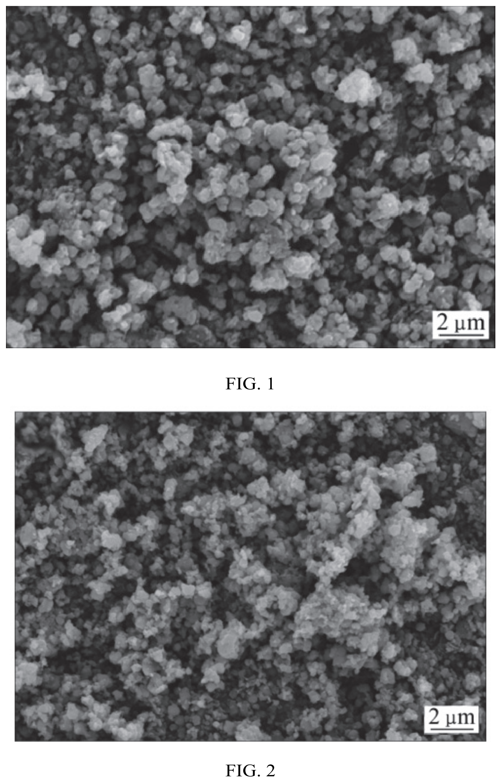

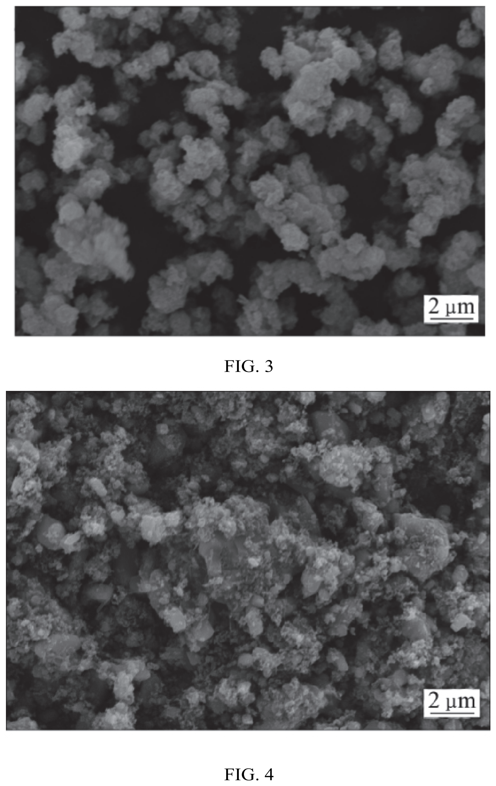

The test results were as shown in FIGs. 1 to 6 and Tables 1 and 2.

As shown in FIGs. 1 to 5, the primary particles of the anhydrous iron phosphate prepared in Example 1 were spherical, had a uniform particle size with an average particle size of about 400 nm, and the agglomeration of the primary particles was relatively loose. In Comparative Example 1, the air was introduced in a conventional air intake manner, resulting in particles with poor uniformity and consequently tighter agglomeration than that of Example 1. In Comparative Example 2, sodium hexadecylbenzenesulfonate was used as the surfactant, and the resulting crystal grains had a larger particle size, with an average particle size of about 800 nm, leading to poor electrochemical performance due to the excessively large particle size. The reason was that although sodium hexadecylbenzenesulfonate could electrostatically adsorb on the surfaces of the crystal grains to regulate the crystal morphology, it could not inhibit the growth and agglomeration of the particles due to the low steric hindrance effect as provided. In Comparative Example 3, sodium hydroxymethyl cellulose was used as the surfactant, and the resulting primary particles were spherical, but had poor dimensional uniformity, and there were more large particles with severe agglomeration. The reason was that the overall polarity of sodium hydroxymethyl cellulose was relatively uniform, so that the dispersing effect on the crystal grains was relatively weak. In Comparative Example 4, no surfactant was added, and the resulting primary particles were disc-shaped and severely agglomerated.

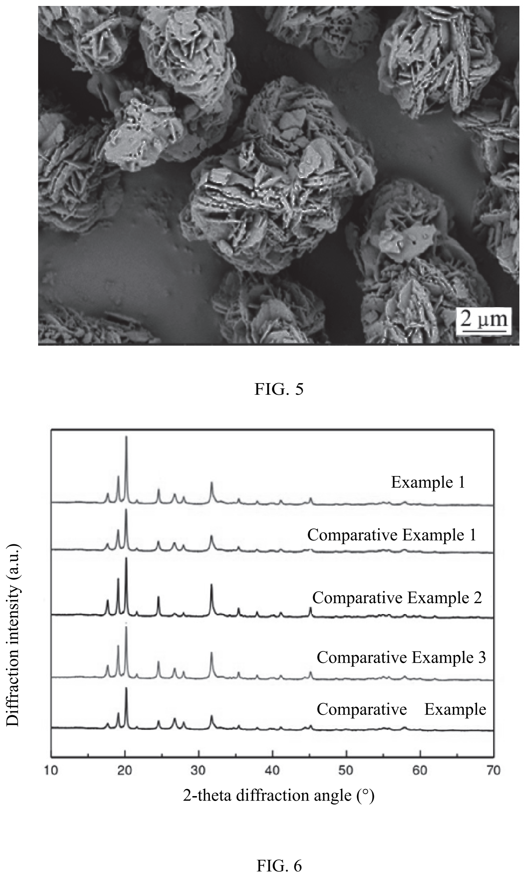

As shown in FIG. 6, each sample was consistent with the standard spectrum of the monoclinic system $FePO_4 \cdot 2H_2O$ (PDF#33-0666), indicating that the addition of the surfactant had no effect on the structure of iron phosphate dihydrate. However, for the diffraction peaks of Example 1 and Comparative Examples 2 and 3, the peak values of the main peaks were higher, the half-peak widths decreased, and the crystallinity of the product was improved, indicating that the addition of the surfactant improved the crystallinity of the material. The crystallinity of Comparative Example 1 was lower. This was because the conventional manner of introducing the gaseous oxidant failed to loosen the amorphous agglomerates, the resulting amorphous agglomerates were larger in particle size, and in the subsequent crystallization stage, some of the amorphous agglomerates remained inside the crystals, resulting in a decrease in crystallinity.

Table 1: Test results

| Sample | Specific surface area, cm²/g | Specific pore volume $V_p$, cm³/g | Average aspect ratio of primary particles | Hardness index | Fe/P ratio |
|---|---|---|---|---|---|
| Example 1 | 9.24 | 1.05 | 1.33 | 1.27 | 0.979 |
| Example 2 | 8.77 | 0.84 | 2.34 | 2.79 | 0.972 |
| Example 3 | 9.87 | 0.91 | 1.11 | 1.22 | 0.967 |
| Example 4 | 9.11 | 0.72 | 1.31 | 1.82 | 0.972 |
| Example 5 | 9.55 | 1.19 | 1.28 | 1.08 | 0.981 |

(continued)

| Sample | Specific surface area, cm2/g | Specific pore volume $V_p$, cm3/g | Average aspect ratio of primary particles | Hardness index | Fe/P ratio |
|---|---|---|---|---|---|
| Example 6 | 9.75 | 1.28 | 1.25 | 0.98 | 0.978 |
| Example 7 | 8.68 | 0.88 | 3.14 | 3.57 | 0.975 |
| Comparative Example 1 | 9.11 | 0.22 | 1.38 | 6.27 | 0.977 |
| Comparative Example 2 | 7.66 | 0.74 | 1.32 | 1.78 | 0.969 |
| Comparative Example 3 | 8.21 | 0.24 | 1.36 | 5.67 | 0.974 |
| Comparative Example 4 | 9.92 | 0.94 | 19.7 | 20.96 | 0.977 |
| Comparative Example 5 | 9.02 | 0.17 | 1.42 | 8.35 | 0.976 |
| Comparative Example 6 | 9.07 | 0.36 | 1.88 | 5.22 | 0.975 |

Table 2: Test results

| Sample | Average diameter of primary particles, nm | $D_{50}$ (0 min) of secondary particles, μm | Span (60 min) | $D_{50}$ (60 min) of secondary particles, μm |
|---|---|---|---|---|
| Example 1 | 372 | 10.06 | 0.942 | 0.68 |
| Example 2 | 396 | 10.28 | 0.914 | 0.78 |
| Example 3 | 254 | 9.84 | 0.902 | 0.52 |
| Example 4 | 395 | 10.12 | 0.866 | 0.85 |
| Example 5 | 327 | 8.74 | 0.926 | 0.61 |
| Example 6 | 411 | 10.11 | 0.934 | 0.79 |
| Example 7 | 405 | 11.2 | 0.893 | 0.82 |
| Comparative Example 1 | 414 | 10.24 | 0.782 | 0.89 |
| Comparative Example 2 | 742 | 12.35 | 0.888 | 1.20 |
| Comparative Example 3 | 525 | 11.24 | 0.789 | 1.07 |
| Comparative Example 4 | 472 | 12.47 | 0.622 | 1.13 |
| Comparative Example 5 | 424 | 10.15 | 0.768 | 937.04 |
| Comparative Example 6 | 392 | 11.02 | 0.784 | 866.32 |

It could be seen from Tables 1 and 2 that:
the surfactants provided in the examples of the present disclosure had similar effects on the morphology regulation of iron phosphate dihydrate, could obtain nearly spherical primary particles, exert a steric hindrance effect, and inhibit the agglomeration of the primary particles. Examples 1-3 adopted different addition amounts of the surfactant. When the addition amount was low, the average aspect ratio of the primary particles was large; and when the addition amount was high, the average aspect ratio of the primary particles decreased; however, the decrease in the particle size of the primary particles resulted in an increase in the specific surface area, which was conducive to agglomeration, thereby resulting in a decrease in the specific pore volume. Although the hardness index of Example 3 was smaller than those of Examples 1 and 2, the grinding effect (the smaller the Span, the weaker the grinding effect) was not as good as those of Examples 1 and 2 because its particle size was the smallest.

The difference among Examples 1, 4 and 5 was that the bubble content of the mixed solution after passing through the micro-nano bubble generator was controlled, and the air was introduced in a conventional air intake manner in Comparative Example 1. When the bubble content was lower or the air was introduced in a conventional manner, the loosening effect of the bubbles on the agglomerates was weaker, the volume of the resulting agglomerates was larger, and the crystallization efficiency in the crystallization stage was lower. On one hand, it caused some amorphous phases remain inside the crystals, resulting in low crystallinity (poor electrochemical performance); on the other hand, it caused fewer initially formed crystal nuclei, larger particle size of the crystal grains, and tight bonding, which was not conducive to grinding, resulting in a low span. When the bubble content was excessively high, the primary particles would become smaller, which was also not conducive to grinding, so the span of Example 1 was the highest.

Example 1 and Comparative Examples 2, 3 and 4 were single-factor tests of surfactants. Comparative Example 2 adopted a small molecule surfactant, which provided a low steric hindrance effect. Therefore, the resulting primary particles had a larger particle size and a subsequently decreased specific surface area. However, due to the large particle size and relatively uniform distribution of the primary particles, its specific pore volume was smaller as compared with Example 1. Moreover, the excessively large primary particles resulted in larger lithium iron phosphate particles under the same grinding conditions, thereby reducing the electrochemical performance. Although Comparative Example 3 used a polymer surfactant, the polarity within the molecular chain was low, leading to poor particle dispersibility, and the steric hindrance effect provided was also weaker than that of Example 1. As a result, the resulting iron phosphate dihydrate had a wide particle size distribution, higher bulk density, low specific pore volume, reduced grinding efficiency, and a low span. Moreover, the formed secondary particles were large, so that the particles obtained after grinding were still large, resulting in a large $D_{50}$ of the iron phosphate and thus low electrochemical performance. In Comparative Example 4, no surfactant was added, and the resulting primary particles were disc-shaped, leading to a large BET. Due to the large aspect ratio, the hardness index was high, the grinding efficiency was low, and the $D_{30}$ of the iron phosphate obtained by sintering was large, ultimately resulting in poor electrochemical performance.

Test Example 2

The iron phosphate material prepared in Examples 1-7 and Comparative Examples 1-6 was mixed with lithium carbonate and glucose in a molar ratio of n(the iron element in the iron phosphate material):n(Li):n(glucose) = 1:1.04:0.05 to obtain a mixed raw material; the mixed raw material was mixed with ethanol and then ground in a grinder for 6 h to obtain a slurry; the slurry was dried in a vacuum oven at 80°C for 4 h to obtain a dry material; and the dry material was calcined at 750°C under a nitrogen atmosphere for 9 h, and sieved to obtain the lithium iron phosphate cathode material.

The above cathode materials were respectively formulated into a uniform slurry according to a mass ratio of the cathode material: acetylene black: PVDF = 75:15:10, and then evenly coated on an aluminum foil substrate as the cathode of a simulated battery. The simulated battery used a lithium sheet as the anode, a polypropylene porous membrane as the separator, and 1 mol of $LiPF_6$ dissolved in 1 L of a mixed solvent of EC and DMC (at a volume ratio of 1:1) as the electrolyte solution. The cathode, the anode, the electrolyte solution and the separator were assembled into a battery in a glove box under the protection of argon.

The battery was subjected to constant-current charge and discharge and cycling performance tests using a LAND battery test system. At 25°C, the voltage range of charge and discharge was 2.5 V-4.2 V.

The electrochemical performance test results of respective cathode materials were shown in Table 3.

Table 3: Test results

| Sample | $D_{50}$, μm | BET, cm$^2$/g | 0.1 C | | 1 C |
|---|---|---|---|---|---|
| | | | Charge specific capacity, mAh/g | Discharge specific capacity, mAh/g | Discharge specific capacity, mAh/g |
| Example 1 | 1.11 | 12.47 | 162.8 | 161.3 | 147.3 |
| Example 2 | 1.17 | 12.13 | 161.7 | 158.8 | 143.3 |
| Example 3 | 0.87 | 13.24 | 162.7 | 161.3 | 148.1 |
| Example 4 | 1.14 | 12.67 | 163.2 | 161.6 | 148.8 |
| Example 5 | 0.95 | 12.85 | 163.5 | 161.5 | 149.0 |
| Example 6 | 1.12 | 12.28 | 162.2 | 159.4 | 144.8 |
| Example 7 | 1.05 | 12.21 | 161.7 | 159.0 | 144.1 |
| Comparative Example 1 | 1.22 | 11.42 | 155.5 | 151.4 | 128.0 |
| Comparative Example 2 | 1.25 | 10.22 | 157.7 | 151.7 | 126.8 |
| Comparative Example 3 | 1.22 | 10.84 | 157.9 | 152.0 | 127.6 |
| Comparative Example 4 | 1.12 | 11.21 | 152.9 | 146.1 | 123.0 |
| Comparative Example 5 | 1.24 | 11.28 | 154.7 | 150.5 | 127.5 |

(continued)

| Sample | $D_{50}$, μm | BET, cm²/g | 0.1 C | | 1 C |
| | | | Charge specific capacity, mAh/g | Discharge specific capacity, mAh/g | Discharge specific capacity, mAh/g |
| --- | --- | --- | --- | --- | --- |
| Comparative Example 6 | 1.28 | 10.12 | 153.7 | 148.1 | 123.8 |

It could be seen from Table 3 that the cathode materials prepared from the respective iron phosphate materials provided in the examples of the present disclosure could have relatively higher charge-discharge specific capacities.

In summary, in the present disclosure, by limiting the equivalent particle size of the primary particles, the $D_{50}$ of the secondary particles, and the hardness index of the iron phosphate material to specific ranges, the iron phosphate material meeting the above features has a loose structure and lower overall hardness. When used for preparing cathode materials, it can improve the efficiency of grinding with the lithium source, and the wear on the equipment can be reduced. The prepared cathode material has good electrochemical performance, facilitating further preparation of batteries and electrical devices with excellent electrochemical performance.

**Industrial Applicability**

The iron phosphate material provided by the present disclosure has a loose structure and lower overall hardness. When used for preparing cathode materials, it can improve the efficiency of grinding with the lithium source, and the wear on the equipment is reduced. The prepared cathode material has good electrochemical performance, facilitating further preparation of batteries and electrical devices with excellent electrochemical performance.

**Claims**

1. An iron phosphate material composed of secondary particles formed by agglomeration of primary particles, wherein the primary particles have an equivalent particle size of 20 nm-600 nm, the equivalent particle size is a diameter of a standard sphere having the same volume as the primary particles; and the secondary particles have a $D_{50}$ of 5 μm-20 μm; and

   a hardness index of the iron phosphate material is $\leq 5$; the hardness $\mathrm{index} = \dfrac{\bar{L}}{V_p}$, wherein $\bar{L}$ is an average aspect ratio of the primary particles, which refers to a ratio of an average length of the longest axis to an average length of the shortest axis of the primary particles; and $V_p$ is a specific pore volume of the iron phosphate material expressed in cm³/g.

2. The iron phosphate material according to claim 1, wherein the iron phosphate material is an anhydrous iron phosphate material.

3. The iron phosphate material according to claim 1 or 2, wherein the $V_p$ of the iron phosphate material is 0.3 cm³/g-1.3 cm³/g.

4. The iron phosphate material according to any one of claims 1-3, wherein the average aspect ratio of the primary particles does not exceed 3.5.

5. The iron phosphate material according to any one of claims 1-4, wherein the hardness index of the iron phosphate material is 0.98-3.57.

6. The iron phosphate material according to any one of claims 1-5, wherein the equivalent particle size of the primary particles is 254 nm-411 nm.

7. The iron phosphate material according to any one of claims 1-6, wherein the $D_{50}$ of the secondary particles is 8.74 μm-10.28 μm.

8. A method for preparing the iron phosphate material according to any one of claims 1-7, comprising the following steps:

contacting a mixed solution of an iron source solution and a phosphorus source solution with an air via a microbubble generator, then mixing a resulting mixture with an oxidant and a pH regulator for a synthesis reaction, and collecting an amorphous iron phosphate precipitate obtained from the reaction; aging the amorphous iron phosphate precipitate to induce crystallization so as to obtain an iron phosphate dihydrate crystal; and calcining the iron phosphate dihydrate crystal to obtain an anhydrous iron phosphate material;

wherein the oxidant comprises at least one of hydrogen peroxide, ozone, sodium persulfate, ammonium persulfate, sodium hypochlorite, sodium ferrate and oxygen;

the step of aging the amorphous iron phosphate precipitate to induce crystallization comprises: dispersing the amorphous iron phosphate precipitate in an aging solution to induce a crystallization reaction;

wherein the aging solution is a phosphoric acid solution containing a surfactant;

wherein the surfactant comprises at least one of a lignin sulfonate and a naphthalene sulfonate-formaldehyde condensate; the lignin sulfonate comprises at least one of sodium lignin sulfonate and ammonium lignin sulfonate; and the naphthalene sulfonate-formaldehyde condensate comprises at least one of a β-naphthalene sulfonate sodium-formaldehyde condensate, a benzylnaphthalene sulfonate sodium-formaldehyde condensate, an α-methylnaphthalene sulfonate sodium-formaldehyde condensate, and an alkylbenzene sulfonate sodium-formaldehyde condensate; and

the crystallization reaction is conducted at a stirring speed of 100 rpm-300 rpm.

9. The preparation method according to claim 8, wherein the synthesis reaction comprises at least one of the following features:

feature 1: the iron source solution is a soluble ferrous salt solution;

feature 2: the phosphorus source comprises at least one of phosphoric acid, sodium dihydrogen phosphate, sodium monohydrogen phosphate, ammonium dihydrogen phosphate, and ammonium monohydrogen phosphate; and

feature 3: the pH regulator comprises at least one of ammonia water, sodium hydroxide, sulfuric acid, hydrochloric acid, and nitric acid.

10. The preparation method according to claim 8 or 9, wherein the synthesis reaction further comprises at least one of the following features:

feature 4: a concentration of the iron source solution is 0.8 mol/L-1.5 mol/L; and

feature 5: a concentration of the phosphorus source solution is 0.85 mol/L-3 mol/L.

11. The preparation method according to any one of claims 8-10, wherein the iron source and the phosphorus source are fed at a molar ratio of P to Fe of 1.05:1 to 1.5:1.

12. The preparation method according to any one of claims 8-11, wherein a total usage amount of the air and the oxidant is not less than a theoretical amount that completely oxidizes all $Fe^{2+}$ in the iron source into $Fe^{3+}$.

13. The preparation method according to any one of claims 8-12, wherein the synthesis reaction further comprises at least one of the following features:

feature 6: a pH value of the synthesis reaction is 1-2.5;

feature 7: the synthesis reaction is conducted at a temperature of 50°C-70°C;

feature 8: the synthesis reaction is conducted for 1 h-4 h; and

feature 9: the synthesis reaction is conducted at a stirring speed of 400 rpm-800 rpm.

14. The preparation method according to any one of claims 8-13, wherein the crystallization reaction comprises at least one of the following features:

feature 10: a pH value of the aging solution is 1-2.5;

feature 11: a concentration of the surfactant contained in the aging solution is 1 wt%-5 wt%; and

feature 12: the amorphous iron phosphate precipitate and the aging solution are fed at a ratio of 1 g:100 mL to 1 g:300 mL.

15. The preparation method according to any one of claims 8-14, wherein the crystallization reaction further comprises at least one of the following features:

> feature 13: the crystallization reaction is conducted at a temperature of 80°C-90°C; and
> feature 14: the crystallization reaction is conducted for 1 h-3 h.

16. The preparation method according to any one of claims 8-15, wherein the calcining comprises at least one of the following features:

> feature 15: the calcining is conducted at a temperature of 600°C-750°C;
> feature 16: the calcining is conducted for 2 h-3 h; and
> feature 17: a heating rate during the calcining process is 3°C/min-5°C/min.

17. A cathode material, wherein the cathode material is prepared by mixing and sintering the iron phosphate material according to any one of claims 1-7 with a lithium source and a carbon source.

18. The cathode material according to claim 17, wherein the cathode material has at least one of the following features:

> feature 18: the cathode material has a $D_{50}$ of 0.87 $\mu$m-1.17 $\mu$m;
> feature 19: a specific surface area of the cathode material is 12.13 cm$^2$/g-12.85 cm$^2$/g;
> feature 20: a 0.1 C charge specific capacity of the cathode material is no less than 161.5 mAh/g;
> feature 21: a 0.1 C discharge specific capacity of the cathode material is no less than 158.5 mAh/g; and
> feature 22: a 1 C discharge specific capacity of the cathode material is no less than 143.0 mAh/g.

19. A cathode sheet, wherein the cathode sheet comprises an active material, and the active material comprises the cathode material according to claim 17 or 18.

20. A battery comprising the cathode sheet according to claim 19.

FIG. 1

FIG. 2

FIG. 3

FIG. 4

FIG. 5

FIG. 6

**INTERNATIONAL SEARCH REPORT**

| International application No. |
| --- |
| **PCT/CN2024/125343** |

| A. | CLASSIFICATION OF SUBJECT MATTER |
| --- | --- |

C01B 25/37(2006.01)i;  H01M4/58(2010.01)i;  H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC:  C01B H01M

Documentation searched other than minimum documentation to the extent that such documents are included in the fields searched

Electronic data base consulted during the international search (name of data base and, where practicable, search terms used)

CNABS, CNTXT, ENTXT, ENTXTC, DWPI, ISI Web of Science, 中国期刊网全文数据库, CJFD: 邦普循环科技, 余海军, 李长东, 王涛, 黄炜妍, 磷酸铁, FePO4, 一次, 二次, 颗粒, 粒径, nm, μm, 微米, 纳米, 微气泡, 氧化, 转晶, 表面活性剂, 木质素磺酸盐, 萘磺酸, 醛缩合, pH, Ferric, iron phosphate, primary, secondary, particle?, diameter, oxidant, hydrogen peroxide, H2O2, ozone, O3, oxygen, pH, Hardness, volume, surface active agent, lignosulfonate, naphthalene sulfonate, formaldehyde, ammonia

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118545688 A (GUANGDONG BRUNP RECYCLING TECHNOLOGY CO., LTD. et al.) 27 August 2024 (2024-08-27)<br>description, paragraphs 0005-0022 | 1-20 |
| Y | CN 117602602 A (GUIZHOU ZHONGWEI XINGYANG ENERGY STORAGE TECHNOLOGY CO., LTD. et al.) 27 February 2024 (2024-02-27)<br>description, paragraphs 0005-0011, 0025-0077, and 0074-0175 | 1-20 |
| Y | CN 102583292 A (NINGBO INSTITUTE OF MATERIALS TECHNOLOGY AND ENGINEERING, CHINESE ACADEMY OF SCIENCES) 18 July 2012 (2012-07-18)<br>description, paragraphs 0007-0026 | 1-20 |
| Y | CN 118221179 A (GUANGDONG BRUNP RECYCLING TECHNOLOGY CO., LTD. et al.) 21 June 2024 (2024-06-21)<br>description, paragraph 0062 | 8-20 |

| ✓ Further documents are listed in the continuation of Box C. | ✓ See patent family annex. |
| --- | --- |

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **02 April 2025** | **16 April 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/125343**

| C. | DOCUMENTS CONSIDERED TO BE RELEVANT | |
|---|---|---|
| Category* | Citation of document, with indication, where appropriate, of the relevant passages | Relevant to claim No. |
| Y | CN 112645299 A (GUANGDONG BRUNP RECYCLING TECHNOLOGY CO., LTD. et al.) 13 April 2021 (2021-04-13)<br>description, paragraphs 0006-0037 | 8-20 |
| Y | CN 102612487 A (TODA KOGYO CORP. et al.) 25 July 2012 (2012-07-25)<br>description, paragraphs 0060-0121 | 1-20 |
| Y | CN 117263153 A (JINCHI ENERGY MATERIALS CO., LTD. et al.) 22 December 2023 (2023-12-22)<br>description, paragraphs 0005-0025 | 1-20 |
| Y | CN 102695760 A (A123 SYSTEMS, INC. et al.) 26 September 2012 (2012-09-26)<br>description, paragraphs 0174-0181 | 1-20 |
| Y | JP 2013149602 A (TAIHEIYO CEMENT CORP. et al.) 01 August 2013 (2013-08-01)<br>claim 1 | 1-20 |

Form PCT/ISA/210 (second sheet) (July 2022)

## INTERNATIONAL SEARCH REPORT
### Information on patent family members

International application No.

**PCT/CN2024/125343**

| Patent document cited in search report | | | Publication date (day/month/year) | Patent family member(s) | | | Publication date (day/month/year) |
|---|---|---|---|---|---|---|---|
| CN | 118545688 | A | 27 August 2024 | CN | 118545688 | B | 12 November 2024 |
| CN | 117602602 | A | 27 February 2024 | | None | | |
| CN | 102583292 | A | 18 July 2012 | CN | 102583292 | B | 25 June 2014 |
| CN | 118221179 | A | 21 June 2024 | | None | | |
| CN | 112645299 | A | 13 April 2021 | WO | 2022116702 | A1 | 06 September 2022 |
| | | | | ID | 202207573 | A | 30 November 2022 |
| CN | 102612487 | A | 25 July 2012 | KR | 20120079058 | A | 11 July 2012 |
| | | | | KR | 101718918 | B1 | 22 March 2017 |
| | | | | JP | 2012012279 | A | 19 January 2012 |
| | | | | JP | 5835540 | B2 | 24 December 2015 |
| | | | | US | 2012237425 | A1 | 20 September 2012 |
| | | | | EP | 2476647 | A1 | 18 July 2012 |
| | | | | EP | 2476647 | B1 | 05 July 2023 |
| | | | | WO | 2011030786 | A1 | 17 March 2011 |
| CN | 117263153 | A | 22 December 2023 | CN | 117263153 | B | 23 August 2024 |
| CN | 102695760 | A | 26 September 2012 | EP | 4112543 | A1 | 04 January 2023 |
| | | | | JP | 2013505193 | A | 14 February 2013 |
| | | | | JP | 6034191 | B2 | 30 November 2016 |
| | | | | WO | 2011035235 | A1 | 24 March 2011 |
| | | | | US | 2011068295 | A1 | 24 March 2011 |
| | | | | US | 9174846 | B2 | 03 November 2015 |
| | | | | EP | 2478061 | A1 | 25 July 2012 |
| | | | | EP | 2478061 | B1 | 06 March 2024 |
| JP | 2013149602 | A | 01 August 2013 | JP | 5557220 | B2 | 23 July 2014 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410994099

**Non-patent literature cited in the description**

- Pore size distribution and porosity of solid materials by mercury intrusion porosimetry and gas adsorption - Part 2: Analysis of mesopores and macropores by gas adsorption. *GB/T 21650.2-2008*